# FASCICULE DE BREVET EUROPEEN

(11) **EP 2 775 889 B1**
(45) Date de publication et mention de la délivrance du brevet: **15.08.2018**
(21) Numéro de dépôt: 12794435.3
(22) Date de dépôt: 05.11.2012
(51) Int. Cl.: A47J 27/00, C25D 11/18, A47J 36/02, B05D 5/08, C25D 11/06, C25D 11/24

(54) **PROCEDE D'OBTENTION D'UN RECIPIENT DE CUISSON COMPORTANT UNE FACE EXTERIEURE ANODISEE DURE COLOREE**
VERFAHREN ZUR HERSTELLUNG EINES KOCHGEFÄSSES MIT FARBIGER, HARTER, ANODISIERTER AUSSENFLÄCHE
METHOD FOR OBTAINING A COOKING VESSEL HAVING A COLOURED HARD ANODIZED OUTER FACE

(30) Priorité: 07.11.2011 FR 1160130
(43) Date de publication de la demande: 17.09.2014
(73) Titulaire: SEB S.A., 69130 Ecully (FR)
(72) Inventeur: RUBIO, Martin, F-74150 Rumilly (FR); TUFFE, Stéphane, F-73160 Cognin (FR)
(74) Mandataire: Cémeli, Eric Philippe Laurent
(86) Numéro de dépôt international: PCT/FR2012/052549
(87) Numéro de publication internationale: WO 2013/068681

(56) Documents cités:
- EP-A1- 2 206 801
- GB-A- 884 477
- JP-A- 59 118 121
- US-A- 3 844 908
- US-A1- 2009 159 601

## Description

La présente invention concerne le domaine technique des appareils et ustensiles de cuisson comportant un récipient de cuisson.

La présente invention concerne plus particulièrement, mais non exclusivement, les articles culinaires tels que les casseroles, les poêles ou les woks, ainsi que les appareils électriques de cuisson comportant une cuve destinée à contenir les aliments.

Il est connu du document GB 1 099 486 de réaliser des récipients de cuisson en aluminium présentant une couche superficielle d'anodisation dure. Cette couche superficielle peut si désiré être pigmentée. La surface ainsi obtenue est plus facile à nettoyer qu'une surface non anodisée. Toutefois la surface ainsi obtenue est moins facile à nettoyer qu'une surface revêtue d'une couche anti-adhésive.

Le document EP 0 424 072 et le document EP 0 902 105 proposent de réaliser des récipients de cuisson comportant un revêtement antiadhérent tel que du PTFE sur un support en aluminium présentant une anodisation dure. L'anodisation dure est donc réalisée préalablement au revêtement PTFE. Cette disposition permet d'améliorer la résistance à l'usure et aux rayures du revêtement PTFE. Usuellement, le revêtement PTFE est utilisé principalement pour revêtir la face intérieure des récipients de cuisson, du fait de la résistance mécanique limitée de ce type de revêtement.

Il est connu du document EP 1 894 502 de réaliser un revêtement sol-gel sur au moins une face d'un article culinaire comportant un support en aluminium ou en alliage d'aluminium, ce support pouvant être en aluminium anodisé. Ce document envisage une épaisseur de couche d'anodisation comprise entre 5 et 100µm. L'autre face peut si désiré être revêtue de PTFE. Le revêtement sol-gel permet d'améliorer la tenue au lave-vaisselle du récipient de cuisson, ainsi que la tenue à la flamme du récipient de cuisson.

Il est connu de la demande FR 10 59522 de réaliser un récipient de cuisson comportant une face extérieure anodisée dure et colorée, pour lequel un revêtement sol gel est réalisé sur la face extérieure anodisée dure. Une telle réalisation permet d'obtenir des récipients de cuisson pour lesquels les colorations de la face extérieure présentent un caractère durable, sont susceptibles de résister aux agents lessiviels utilisés dans les lave-vaisselle et résistent à la flamme. Un inconvénient de la réalisation proposée réside dans la complexité du procédé d'obtention mis en oeuvre, qui nécessite de nombreuses étapes.

Un procéde d'obtention d'un récipient de cuisson selon le préambule de la revendication 1 et un récipient de cuisson selon le préambule de la revendication 11 sont connus du document US2009/159601. Un but de la présente invention est de proposer des colorations de la surface extérieure anodisée d'un récipient de cuisson, qui présentent un caractère durable, sans nécessiter de revêtement de protection.

Un autre but de la présente invention est de proposer des colorations de la surface extérieure anodisée d'un récipient de cuisson, qui soient susceptibles de résister à la flamme utilisée pour réaliser les cuissons, sans nécessiter de revêtement de protection.

Un autre but de la présente invention est de proposer des colorations de la surface extérieure anodisée d'un récipient de cuisson, qui soient susceptibles de résister aux agents lessiviels utilisés dans les lave-vaisselle, sans nécessiter de revêtement de protection.

Un but additionnel de la présente invention est de proposer des colorations de la surface extérieure anodisée d'un récipient de cuisson, qui soient compatibles avec un revêtement PTFE de la surface intérieure dudit récipient de cuisson, sans nécessiter de revêtement de protection.

Ces buts sont atteints avec un procédé d'obtention d'un récipient de cuisson comportant les étapes suivantes :
- réalisation d'une cuve présentant une face extérieure en aluminium et une face intérieure,
- réalisation d'une anodisation d'au moins la face extérieure de la cuve,
dans lequel au moins une étape de coloration est réalisée sur la face extérieure anodisée après l'anodisation, ladite étape de coloration mettant en oeuvre au moins un pigment, du fait que l'anodisation est une anodisation dure pour obtenir une couche anodisée dure, et que le pigment est un pigment minéral hydrosoluble, l'étape de coloration utilisant un bain de coloration contenant des composés métalliques hydrosolubles qui vont précipiter et être piégés à l'intérieur des pores de la couche anodisée dure, le ou l'un au moins des pigments minéraux étant de type ferri-oxalate, de sorte que l'ajout d'un revêtement de protection n'est plus nécessaire pour conserver la coloration de la surface extérieure anodisée du récipient de cuisson.

De manière surprenante, des essais ont montré que des colorations de surface extérieures anodisées de récipient de cuisson ainsi réalisées présentent un caractère durable, même lorsque le récipient de cuisson est exposé à la flamme, sans nécessiter de revêtement de protection tel qu'un revêtement de type sol-gel, vernis, laque, PTFE. De manière surprenante, il a été observé que les pigments minéraux du type précité permettent d'obtenir des colorations de la surface extérieure anodisée d'un récipient de cuisson, qui présentent un caractère durable, même lorsque le récipient de cuisson est exposé à la flamme, et aussi une tenue satisfaisante aux agents lessiviels utilisés dans les lave-vaisselle, sans nécessiter de revêtement de protection additionnel tel que notamment revêtement de type sol-gel, vernis, laque ou PTFE. Avantageusement, l'étape de coloration utilise une immersion dans une solution aqueuse de composés hydrosolubles à base de sels et/ou d'oxydes métalliques. L'acétate de cobalt ou le permanganate de potassium présentent par exemple des propriétés appropriées.

Selon une forme de réalisation préférée, le ou l'un au moins des pigments minéraux est/sont un ferri-oxalate d'ammonium. En alternative, le ou l'un au moins des pigments minéraux pourrait notamment être un ferri-oxalate de sodium.

Selon une forme de réalisation préférée, ledit procédé comporte une étape de réalisation d'un revêtement PTFE sur la face intérieure de la cuve. Si désiré l'étape de réalisation d'un revêtement PTFE peut comporter une préparation de surface ainsi que le dépôt d'une ou plusieurs couches intermédiaires. Le revêtement PTFE peut notamment être réalisé par enduction.

Alors, selon un mode de réalisation, le procédé comporte une étape de réalisation d'un revêtement PTFE sur la face intérieure de la cuve et l'étape de réalisation d'une anodisation dure de la face extérieure de la cuve intervient après l'étape de réalisation d'un revêtement PTFE sur la face intérieure de la cuve. L'anodisation effectuée après le revêtement PTFE présente l'avantage de n'anodiser que la face extérieure de la cuve, ce qui permet de réduire le temps de traitement, de diminuer la consommation de courant et d'acide par rapport à l'anodisation de la face extérieure et de la face intérieure de la cuve. De plus le PTFE supporte bien le bain d'acide sulfurique usuellement utilisé pour réaliser l'anodisation.

Si désiré, le procédé comporte une étape de réalisation d'une anodisation dure préliminaire de la face extérieure et de la face intérieure de la cuve avant l'étape de réalisation d'un revêtement PTFE sur la face intérieure de la cuve, l'étape de réalisation d'une anodisation dure de la face extérieure de la cuve intervenant après une étape de décapage de la face extérieure de la cuve postérieure à l'étape de réalisation d'un revêtement PTFE sur la face intérieure de la cuve. Ce traitement d'anodisation dure préliminaire concerne la face intérieure et la face extérieure de la cuve et permet d'obtenir une base dure avant la réalisation de revêtement PTFE.

Selon un autre mode de réalisation, l'étape d'anodisation dure et l'étape de coloration sont réalisées sur la face intérieure et la face extérieure de la cuve. Ce traitement d'anodisation dure concerne la face intérieure et la face extérieure de la cuve et permet d'obtenir une base dure.

Avantageusement, le procédé comporte une étape de réalisation d'un revêtement PTFE sur la face intérieure de la cuve après l'étape de coloration. L'étape de réalisation d'un revêtement PTFE peut être envisagée après l'étape de coloration, du fait que les pigments envisagés résistent aux températures utilisées lors de la cuisson du revêtement PTFE.

Selon une caractéristique avantageuse de l'invention, l'anodisation dure est réalisée à une température supérieure ou égale à 0°C. Pour des températures d'anodisation inférieures, les pores formés lors de l'anodisation sont en effet très denses et très petits et la coloration de la surface anodisée dure ne se fait pas.

Selon une autre caractéristique avantageuse de l'invention, l'anodisation dure est réalisée à une température inférieure ou égale à 17°C. Pour des températures d'anodisation supérieures, les pores formés lors de l'anodisation sont trop gros et l'anodisation n'est pas suffisamment dure, même si la coloration se fait bien.

Selon une caractéristique préférée de l'invention, l'anodisation dure est réalisée à une température comprise entre 5°C et 12°C. Pour cette gamme de températures, les pores formés lors de l'anodisation sont suffisamment petits pour que la surface anodisée soit suffisamment dure, et suffisamment gros pour que les pigments minéraux hydrosolubles colorent bien la surface anodisée dure.

Ces buts sont atteints aussi avec un récipient de cuisson comportant une cuve présentant une face extérieure en aluminium ainsi qu'une face intérieure, au moins la face extérieure en aluminium étant anodisée et colorée, du fait que la face extérieure est anodisée dure pour obtenir une couche anodisée dure, que la face extérieure anodisée dure est colorée avec au moins un pigment minéral hydrosoluble, des composés métalliques hydrosolubles étant piégés à l'intérieur des pores de la couche anodisée dure, le ou l'un au moins des pigments minéraux étant de type ferri-oxalate, de sorte que l'ajout d'un revêtement de protection n'est plus nécessaire pour conserver la coloration de la surface extérieure anodisée du récipient de cuisson.

Selon un mode de réalisation avantageux, la cuve est obtenue par emboutissage d'un substrat présentant au moins une face en aluminium, ladite face formant alors la face extérieure de la cuve.

Alors, selon une forme de réalisation, le substrat présente deux faces en aluminium. Le substrat peut notamment être en aluminium massif, ou en colaminé présentant deux faces en aluminium et une âme en acier. Si désiré l'acier peut être choisi parmi les aciers inoxydables.

Alors, selon une autre forme de réalisation, le substrat est formé par un colaminé présentant une face en aluminium et une face en acier inoxydable, cette face en acier inoxydable étant avantageusement destinée à être revêtue de PTFE.

Selon un autre mode de réalisation avantageux, la cuve est réalisée en fonte d'aluminium.

Selon une forme de réalisation avantageuse, la face extérieure de la cuve présente une surface brossée ou microbillée. Le traitement d'anodisation est un traitement de surface, dans lequel la matière de la surface est modifiée, et non un revêtement de surface, dans lequel une ou plusieurs couches sont ajoutées sur une surface existante. Le traitement d'anodisation dure n'est pas limité aux états de surfaces lisses ou polis, une anodisation peut notamment être envisagée sur une surface brossée ou microbillée.

Avantageusement, pour obtenir un récipient de cuisson compatible induction, la cuve comporte au moins un insert réalisé en matériau ferromagnétique.

Ces buts sont atteints aussi avec un article culinaire comportant un récipient de cuisson et un organe de préhension fixé sur ledit récipient de cuisson par au moins un rivet ou par soudage, ledit récipient de cuisson étant conforme à l'une au moins des caractéristiques précitées.

Ces buts sont atteints aussi avec un appareil électrique de cuisson, comportant un récipient de cuisson associé à des moyens de chauffe, ledit récipient de cuisson étant conforme à l'une au moins des caractéristiques précitées.

L'invention sera mieux comprise à l'étude d'exemples de réalisation, pris à titre nullement limitatif, illustrés dans les figures annexées, dans lesquelles :
- la figure 1 illustre un récipient de cuisson 1 selon l'invention,
- la figure 2 illustre un article culinaire 100 comportant un récipient de cuisson 1 selon l'invention,
- la figure 3 illustre de manière schématique un appareil électrique de cuisson 200 comportant un récipient de cuisson 1 selon l'invention.

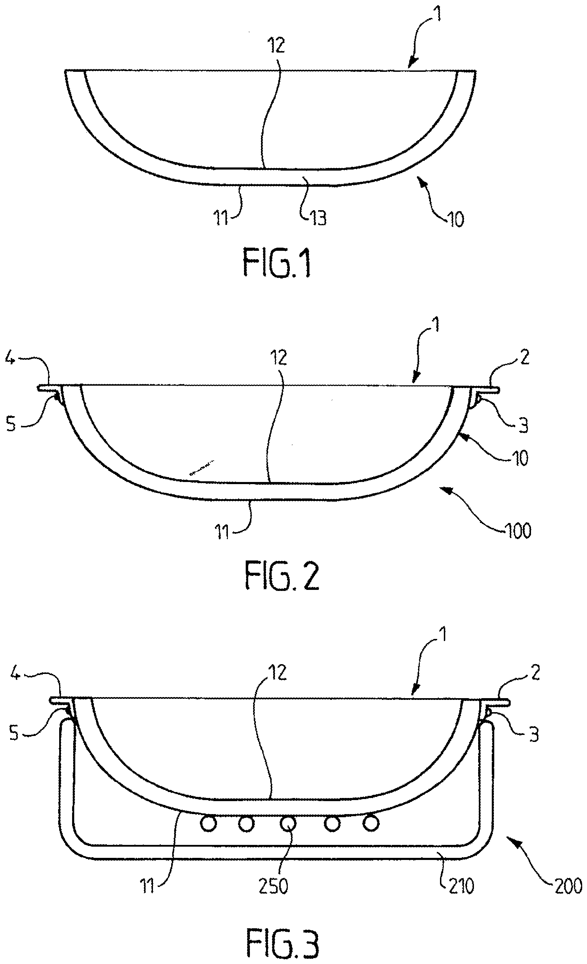

Le récipient de cuisson 1 illustré sur les figures 1 et 2 comporte une cuve 10 présentant une face extérieure 11 en aluminium ainsi qu'une face intérieure 12.

Selon un mode de réalisation, la cuve 10 est obtenue par emboutissage d'un substrat 13 présentant au moins une face en aluminium destinée à former la face extérieure 11 de la cuve 10.

Selon une forme de réalisation, le substrat 13 présente deux faces en aluminium destinées à former respectivement la face extérieure 11 et la face intérieure 12 de la cuve 10.

Si désiré, le substrat 13 peut être en aluminium massif. Un alliage d'aluminium 3003 peut notamment être utilisé à cet effet. Le substrat 13 utilisé pour former la cuve 10 est alors découpé dans une tôle d'aluminium.

Selon une autre forme de réalisation, le substrat 13 est formé par un colaminé présentant une face en aluminium et une face en acier inoxydable, la face en aluminium étant destinée à former la face extérieure 11 de la cuve, la face en acier inoxydable étant destinée à former la face intérieure 12 de la cuve 10.

Selon autre un mode de réalisation, la cuve 10 est réalisée en fonte d'aluminium, par exemple avec un alliage d'aluminium AlSi12.

Si désiré, la face extérieure 11 de la cuve 10 n'est pas nécessairement lisse ou polie, mais peut notamment présenter une surface brossée ou microbillée.

Si désiré la cuve 10 peut comporter au moins un insert réalisé en matériau ferromagnétique, tel que par exemple un acier ferritique, pour réaliser un récipient de cuisson 1 susceptible d'être chauffé par induction. De préférence le matériau ferromagnétique est un acier inoxydable ferritique. Si désiré l'insert réalisé en matériau ferromagnétique peut être formé par une plaque comportant une ou plusieurs perforations. L'insert est avantageusement assemblé par frappe à chaud ou à froid avec l'aluminium du substrat 13 ou est recouvert d'aluminium moulé, la ou les perforations étant de préférence remplies par l'aluminium. L'insert réalisé en matériau ferromagnétique peut présenter au moins une partie apparente, qu'il convient de protéger par un masquage dans les bains chimiques acides, tels que notamment le ou les bains d'anodisation.

Le récipient de cuisson 1 selon l'invention est obtenu selon un procédé selon la revendication 1. Les pigments minéraux présentent une bonne tenue à la température pouvant dépasser 300°C, voire 400°C. Les pigments minéraux hydrosolubles permettent d'obtenir des colorations de la surface extérieure anodisée d'un récipient de cuisson, qui présentent un caractère durable. La ou l'une des étapes de coloration utilisent un bain de coloration contenant des composés métalliques hydrosolubles qui vont précipiter et être piégés à l'intérieur des pores de la couche anodisée dure. L'ajout d'un revêtement de protection n'apparait plus nécessaire pour conserver la coloration de la surface extérieure anodisée du récipient de cuisson reposant sur une plaque chauffante, voire exposée à une flamme provenant d'un brûleur tel un brûleur à gaz.

Selon une forme de réalisation avantageuse, l'étape de coloration utilise une immersion dans une solution aqueuse de composés hydrosolubles à base de sels et/ou d'oxydes métalliques.

Parmi les pigments minéraux hydrosolubles, l'acétate de cobalt Co(CH₃COO)₂, H₂O ou le permanganate de potassium KMnO₄ permettent d'obtenir des colorations de couleur bronze ; le ferri-oxalate d'ammonium (NH₄)Fe(C₂O₄)3H₂O permet d'obtenir des colorations de couleur jaune à ocre. Des essais menés avec le ferri-oxalate d'ammonium « jaune Gold4N » de OMYA ont montré de manière surprenante une tenue satisfaisante de la coloration obtenue aux agents lessiviels rencontrés dans les lave-vaisselle, sans revêtement de protection additionnel tel que notamment revêtement de type sol-gel, vernis, laque ou PTFE. Ainsi selon une forme de réalisation préférée, le ou l'un au moins des pigments minéraux est/sont de type ferri-oxalate. L'utilisation d'autres ferri-oxalates que le ferri-oxalate d'ammonium pourrait être envisagée, par exemple le ferri-oxalate de sodium ou le ferri-oxalate de potassium.

Avant coloration, les surfaces à colorer sont soumises à une attaque dans un produit alcalin suivie de rinçages et d'une neutralisation en milieu acide. Si désiré, une préparation mécanique préalable peut être réalisée selon l'aspect de surface recherché, par exemple une préparation mécanique par polissage, brossage, sablage ou grenaillage. Après la neutralisation un brillantage peut être réalisé par immersion dans un bain d'acide phosphorique. L'étape d'anodisation dans une solution d'acide sulfurique est réalisée avec une concentration en acide comprise entre 10 et 500 g/l, à une température comprise entre -10°C à +30°C, avec un courant continu présentant une densité de courant comprise entre 0,1 à 5 A/dm². Des essais ont montré que pour obtenir une anodisation suffisamment dure, la température du bain d'anodisation doit être inférieure ou égale à 17°C, et de préférence inférieure ou égale à 12°C ; pour obtenir une coloration de la surface anodisée dure, la température du bain d'anodisation doit être supérieure ou égale à 0°C, et de préférence supérieure ou égale à 5°C. L'opération d'anodisation est suivie de plusieurs rinçages dont le dernier est réalisé avec de l'eau déminéralisée. Cette gamme de traitement conduit à la formation d'une couche anodisée d'une épaisseur variable suivant le temps de traitement de 5 à 100 µm et d'une dureté allant de 100 à 600 Vickers.

Avantageusement, le bain de coloration est formé par une solution aqueuse comportant entre 5 et 100g/l de ferri-oxalate d'ammonium (NH₄)Fe(C₂O₄)3H₂O. La solution aqueuse est préparée avec de l'eau déminéralisée. Le pH obtenu est compris entre 4 et 6. La température du bain de coloration est comprise entre 10 et 60°C. Le temps de coloration dépend de la couleur recherchée et est typiquement compris entre 1 et 30 min. Selon la concentration du bain de coloration et le temps de colorations, des couleurs allant du marron foncé au jaune or peuvent être obtenues.

De préférence, l'étape de coloration est suivie d'une étape de rinçage. L'étape de rinçage peut être suivie d'une étape de colmatage. L'étape de colmatage peut par exemple utiliser l'eau bouillante, ou encore de la vapeur saturée, ou encore un bain contenant des sels métalliques de nickel et/ou de lithium. Toutefois la présence d'une étape de colmatage ne semble pas modifier de manière notoire la durabilité des colorations obtenues.

Le procédé comporte avantagement une étape de réalisation d'un revêtement PTFE sur la face intérieure de la cuve. L'étape de réalisation du revêtement PTFE peut notamment être réalisée par enduction. Si désiré, l'étape de réalisation du revêtement PTFE peut utiliser un PTFE chargé, pour améliorer la résistance de la surface de la face intérieure 12 de la cuve 10 revêtue de PTFE. Des particules minérales peuvent notamment être utilisées comme charge de renfort. Pour obtenir la surface de cuisson en PTFE, le revêtement PTFE est chauffé à une température dépassant 400°C (usuellement de l'ordre de 420°C).

Selon un mode de réalisation, l'étape de réalisation d'une anodisation dure de la face extérieure 11 de la cuve 10 intervient avant l'étape de réalisation du revêtement PTFE sur la face intérieure 12 de la cuve 10. L'obtention d'un revêtement PTFE après anodisation dure est notamment divulguée dans le document EP 0 902 105. Cette disposition permet d'obtenir une base dure améliorant la résistance mécanique du revêtement PTFE.

Selon un autre mode de réalisation, l'étape de réalisation d'une anodisation dure de la face extérieure 11 de la cuve 10 intervient après l'étape de réalisation du revêtement PTFE sur la face intérieure 12 de la cuve 10.

Si désiré, une étape de réalisation d'une anodisation dure préliminaire de la face extérieure 11 et de la face intérieure 12 de la cuve 10 peut être envisagée avant l'étape de réalisation d'un revêtement PTFE sur la face intérieure 12 de la cuve 10. Ce traitement préalable d'anodisation dure permet d'obtenir une base dure sous le revêtement PTFE. Toutefois un décapage de la face extérieure 11 de la cuve 10 est alors nécessaire pour réanodiser ladite face extérieure 11 avant de procéder à une étape de coloration. L'étape de réalisation d'une anodisation dure de la face extérieure 11 de la cuve 10 intervient alors après une étape de décapage de la face extérieure 11 de la cuve 10 postérieure à l'étape de réalisation d'un revêtement PTFE sur la face intérieure 12 de la cuve 10.

L'étape d'anodisation dure peut être réalisée sur la face intérieure 12 et la face extérieure 11 de la cuve 10, pour obtenir une base dure. L'étape d'anodisation dure est alors une étape d'anodisation dure bi-face.

Si désiré, l'étape de coloration peut être réalisée sur la face intérieure 12 et la face extérieure 11 de la cuve 10, après l'étape d'anodisation dure. Une étape de réalisation d'un revêtement PTFE sur la face intérieure 12 de la cuve 10 peut alors être envisagée après l'étape de coloration.

En alternative, une étape de réalisation d'un revêtement PTFE sur la face intérieure 12 de la cuve 10 peut être envisagée après l'étape d'anodisation dure bi-face. Une autre étape d'anodisation dure est alors réalisée sur la face extérieure 11 de la cuve 10 après l'étape de réalisation d'un revêtement PTFE sur la face intérieure 12 de la cuve 10. L'étape de coloration sur la face extérieure 11 de la cuve 10 anodisée dure intervient après l'autre étape d'anodisation dure.

Si désiré, une préparation de surface avant l'anodisation dure peut comporter un dégraissage de type acide ou basique et/ou un décapage de type acide ou basique, et/ou une neutralisation à l'HNO₃. Un dégraissage de quelques minutes dans un bain de NaOH de concentration 50 g/l à une température de l'ordre de 50°C donne des résultats satisfaisants.

Le traitement d'anodisation dure peut notamment être réalisé par trempage dans un bain. Le traitement d'anodisation préliminaire peut aussi être réalisé par trempage dans un bain. L'anodisation dure présente l'avantage d'une bonne résistance aux rayures et aux chocs. Une gamme de matériaux plus étendue peut ainsi être envisagée pour la réalisation de la cuve 10, par rapport à un émaillage, tout en conservant les propriétés de nettoyage conférées par le revêtement PTFE de la face intérieure 12 de la cuve 10.

L'anodisation dure peut par exemple être obtenue avec un bain de H₂SO₄ de concentration 130 g/l pendant 90 min à une température de l'ordre de 10°C avec une densité courant de l'ordre de 1,8 A/dm². Des températures plus basses autour de 0°C avec une densité de courant supérieure permettent de réduire le temps de traitement.

Une couche anodisée dure présentant une épaisseur comprise entre 10 µm et 30 µm présente une dureté d'environ 350 Hv et donne des résultats satisfaisants tant pour la tenue mécanique que pour les possibilités de coloration.

Selon une caractéristique préférée, la face extérieure 11 anodisée comporte des pores de taille inférieure à 30 nm et de préférence inférieure à 20 nm.

Le procédé selon l'invention peut notamment comporter les exemples de réalisation suivants :
Exemple 1 : enduction PTFE de la face intérieure 12, anodisation dure de la face extérieure 11, coloration de la face extérieure 11 anodisée dure.
Exemple 2 : anodisation dure préliminaire bi-face de la cuve 10 pour obtenir une base dure, enduction PTFE de la face intérieure 12, anodisation dure de la face extérieure 11, coloration de la face extérieure 11 anodisée dure.
Exemple 3 : anodisation dure bi-face de la cuve 10 pour obtenir une base dure, coloration de la face extérieure 11 et de la face intérieure 12 anodisées dures, enduction PTFE de la face intérieure 12.
Exemple 4 : anodisation dure bi-face de la cuve 10 pour obtenir une base dure, coloration de la face extérieure 11 et de la face intérieure 12 anodisées dures, enduction PTFE de la face intérieure 12, anodisation dure de la face extérieure 11, coloration de la face extérieure 11 anodisée dure.
Exemple 5 : anodisation dure bi-face de la cuve 10 pour obtenir une base dure, coloration de la face extérieure 11 et de la face intérieure 12 anodisées dures.

La figure 2 illustre un article culinaire 100 comportant un récipient de cuisson 1 et un organe de préhension 2 fixé sur ledit récipient de cuisson 1 par au moins un rivet 3. A cet effet le rivet 3 est monté dans un trou ménagé dans la cuve 10 du récipient de cuisson 1. Si désiré plusieurs rivets 3 peuvent être utilisés pour fixer l'organe de préhension 2 sur le récipient de cuisson 1. De préférence entre deux et quatre rivets 3 sont utilisés pour fixer l'organe de préhension 2 sur le récipient de cuisson 1. En alternative l'organe de préhension 2 pourrait être fixé sur ledit récipient de cuisson 1 par soudage. Si désiré un autre organe de préhension 4 peut être fixé sur ledit récipient de cuisson 1 par au moins un autre rivet 5 ou par soudage.

La figure 3 illustre un appareil électrique de cuisson 200, comportant un récipient de cuisson 1 associé à des moyens de chauffe 250. Le récipient de cuisson 1 forme une cuve agencée dans une base chauffante 210 comportant les moyens de chauffe 250. La face extérieure 11 de la cuve 10 repose sur les moyens de chauffe 250. Si désiré la face extérieure 11 peut être solidaire des moyens de chauffe 250.

A titre de variante, la face intérieure 12 de la cuve 10 n'est pas nécessairement revêtue de PTFE, d'autres types de revêtements peuvent être envisagés si désiré.

A titre de variante, la face intérieure 12 de la cuve 10 n'est pas nécessairement revêtue. Si désiré la face intérieure 12 de la cuve 10 peut notamment être polie.

La présente invention n'est nullement limitée aux exemples de réalisation décrits, mais englobe de nombreuses modifications dans le cadre des revendications.

## Revendications

1. Procédé d'obtention d'un récipient de cuisson (1), comportant les étapes suivantes :
- réalisation d'une cuve (10) présentant une face extérieure (11) en aluminium et une face intérieure (12),
- réalisation d'une anodisation d'au moins la face extérieure (11) de la cuve (10),
- au moins une étape de coloration étant réalisée sur la face extérieure anodisée après l'anodisation, ladite étape de coloration mettant en oeuvre au moins un pigment,
**caractérisé en ce que** l'anodisation est une anodisation dure pour obtenir une couche anodisée dure, **en ce que** le pigment est un pigment minéral hydrosoluble, l'étape de coloration utilisant un bain de coloration contenant des composés métalliques hydrosolubles qui vont précipiter et être piégés à l'intérieur des pores de la couche anodisée dure, le ou l'un au moins des pigments minéraux est/sont de type ferri-oxalate, de sorte que l'ajout d'un revêtement de protection n'est plus nécessaire pour conserver la coloration de la surface extérieure anodisée du récipient de cuisson (1).

2. Procédé d'obtention d'un récipient de cuisson (1) selon la revendication 1, **caractérisé en ce que** l'étape de coloration utilise une immersion dans une solution aqueuse de composés hydrosolubles à base de sels et/ou d'oxydes métalliques.

3. Procédé d'obtention d'un récipient de cuisson (1) selon l'une des revendications 1 ou 2, **caractérisé en ce que** le ou l'un au moins des pigments minéraux est/sont un ferri-oxalate d'ammonium.

4. Procédé d'obtention d'un récipient de cuisson (1) selon l'une des revendications 1 à 3, **caractérisé en ce qu'**il comporte une étape de réalisation d'un revêtement PTFE sur la face intérieure (12) de la cuve (10) et **en ce que** l'étape de réalisation d'une anodisation dure de la face extérieure (11) de la cuve (10) intervient après l'étape de réalisation d'un revêtement PTFE sur la face intérieure (12) de la cuve (10).

5. Procédé d'obtention d'un récipient de cuisson (1) selon la revendication 4, **caractérisé en ce qu'**il comporte une étape de réalisation d'une anodisation dure préliminaire de la face extérieure (11) et de la face intérieure (12) de la cuve (10) avant l'étape de réalisation d'un revêtement PTFE sur la face intérieure (12) de la cuve (10) et **en ce que** l'étape de réalisation d'une anodisation dure de la face extérieure (11) de la cuve (10) intervient après une étape de décapage de la face extérieure (11) de la cuve (10) postérieure à l'étape de réalisation d'un revêtement PTFE sur la face intérieure (12) de la cuve (10).

6. Procédé d'obtention d'un récipient de cuisson (1) selon l'une des revendications 1 à 3, **caractérisé en ce que** l'étape d'anodisation dure et l'étape de coloration sont réalisées sur la face intérieure (12) et la face extérieure (11) de la cuve (10).

7. Procédé d'obtention d'un récipient de cuisson (1) selon la revendication 6, **caractérisé en ce qu'**il comporte une étape de réalisation d'un revêtement PTFE sur la face intérieure (12) de la cuve (10) après l'étape de coloration.

8. Procédé d'obtention d'un récipient de cuisson (1) selon l'une des revendications 1 à 7, **caractérisé en ce que** l'anodisation dure est réalisée à une température supérieure ou égale à 0°C.

9. Procédé d'obtention d'un récipient de cuisson (1) selon la revendication 8, **caractérisé en ce que** l'anodisation dure est réalisée à une température inférieure ou égale à 17°C.

10. Procédé d'obtention d'un récipient de cuisson (1) selon l'une des revendications 1 à 9, **caractérisé en ce que** l'anodisation dure est réalisée à une température comprise entre 5°C et 12°C.

11. Récipient de cuisson (1) comportant une cuve (10) présentant une face extérieure (11) en aluminium ainsi qu'une face intérieure (12), au moins la face extérieure (11) en aluminium étant anodisée et colorée, **caractérisé en ce que** la face extérieure (11) est anodisée dure pour obtenir une couche anodisée dure, **en ce que** la face extérieure (11) anodisée dure est colorée avec au moins un pigment minéral hydrosoluble, des composés métalliques hydrosolubles étant piégés à l'intérieur des pores de la couche anodisée dure, le ou l'un au moins des pigments minéraux étant de type ferri-oxalate, de sorte que l'ajout d'un revêtement de protection n'est plus nécessaire pour conserver la coloration de la surface extérieure anodisée du récipient de cuisson (1).

12. Récipient de cuisson (1) selon la revendication 11, **caractérisé en ce que** le ou l'un au moins des pigments minéraux est/sont un ferri-oxalate d'ammonium.

13. Récipient de cuisson (1) selon l'une des revendications 11 ou 12, **caractérisé en ce que** la cuve (10) est obtenue par emboutissage d'un substrat (13) présentant au moins une face en aluminium.

14. Récipient de cuisson (1) selon la revendication 13, **caractérisé en ce que** le substrat (13) présente deux faces en aluminium.

15. Récipient de cuisson (1) selon l'une des revendications 13 ou 14, **caractérisé en ce que** le substrat (13) est en aluminium massif.

16. Récipient de cuisson (1) selon la revendication 13, **caractérisé en ce que** le substrat (13) est formé par un colaminé présentant une face en aluminium et une face en acier inoxydable.

17. Récipient de cuisson (1) selon l'une des revendications 11 à 15, **caractérisé en ce que** la cuve (10) est réalisée en fonte d'aluminium.

18. Récipient de cuisson (1) selon l'une des revendications 11 à 17, **caractérisé en ce que** la face extérieure (11) de la cuve (10) présente une surface brossée ou microbillée.

19. Récipient de cuisson (1) selon l'une des revendications 11 à 18, **caractérisé en ce que** la cuve (10) comporte au moins un insert réalisé en matériau ferromagnétique.

20. Article culinaire (100) comportant un récipient de cuisson (1) et un organe de préhension (2) fixé sur ledit récipient de cuisson (1) par au moins un rivet (3) ou par soudage, **caractérisé en ce que** ledit récipient de cuisson (1) est conforme à l'une des revendications 11 à 19.

21. Appareil électrique de cuisson (200), comportant un récipient de cuisson (1) associé à des moyens de chauffe (250), **caractérisé en ce que** ledit récipient de cuisson (1) est conforme à l'une des revendications 11 à 19.

## Patentansprüche

1. Verfahren zum Erhalten eines Kochgefäßes (1), umfassend die folgenden Schritte:
- Realisierung eines Gefäßes (10), das eine Außenfläche (11) aus Aluminium und eine Innenfläche (12) aufweist;
- Realisierung einer Eloxierung mindestens einer Außenfläche (11) der Wanne (10),
- mindestens einen Färbungsschritt, der auf der eloxierten Außenfläche nach der Eloxierung realisiert wird, wobei der Färbungsschritt mindestens ein Pigment einsetzt,
**dadurch gekennzeichnet, dass** die Eloxierung eine Harteloxierung ist, um eine harteloxierte Schicht zu erhalten, dass das Pigment ein mineralisches, wasserlösliches Pigment ist, wobei der Färbungsschritt ein Färbungsbad verwendet, das metallische, wasserlösliche Verbindungen enthält, die im Inneren der Poren der harteloxierten Schicht ausfällen werden und eingefangen werden, wobei das oder das mindestens eine der mineralischen Pigmente vom Ferrioxalattyp ist/sind, so dass das Hinzufügen einer Schutzbeschichtung nicht mehr notwendig ist, um die Färbung der eloxierten Außenfläche des Kochgefäßes (1) zu bewahren.

2. Verfahren zum Erhalten eines Kochgefäßes (1) nach Anspruch 1, **dadurch gekennzeichnet, dass** der Färbungsschritt ein Eintauchen in eine wässrige Lösung von wasserlöslichen Verbindungen auf der Basis von Salzen und / oder Metalloxiden verwendet.

3. Verfahren zum Erhalten eines Kochgefäßes (1) nach einem der Ansprüche 1 oder 2, **dadurch gekennzeichnet, dass** das oder das mindestens eine der mineralischen Pigmente ein Ammoniumferrioxalat ist/sind.

4. Verfahren zum Erhalten eines Kochgefäßes (1) nach einem der Ansprüche 1 bis 3, **dadurch gekennzeichnet, dass** es einen Schritt der Realisierung einer PTFE-Beschichtung auf der Innenfläche (12) der Wanne (10) aufweist, und dass der Schritt der Realisierung einer Harteloxierung der Außenfläche (11) der Wanne (10) nach dem Schritt der Realisierung einer PTFE-Beschichtung auf der Innenfläche (12) der Wanne (10) erfolgt.

5. Verfahren zum Erhalten eines Kochgefäßes (1) nach Anspruch 4, **dadurch gekennzeichnet, dass** es einen Schritt der Realisierung einer vorläufigen Harteloxierung der Außenfläche (11) und der Innenfläche (12) der Wanne (10) vor dem Schritt der Realisierung einer PTFE-Beschichtung auf der Innenfläche (12) der Wanne (10) aufweist, und dass der Schritt der Realisierung einer Harteloxierung der Außenfläche (11) der Wanne (10) nach einem Schritt zum Abbeizen der Außenfläche (11) der Wanne (10) auf den Schritt der Realisierung einer PTFE-Beschichtung auf der Innenfläche (12) der Wanne (10) erfolgt.

6. Verfahren zum Erhalten eines Kochgefäßes (1) nach einem der Ansprüche 1 bis 3, **dadurch gekennzeichnet, dass** der Harteloxierung schritt und der Färbeschritt auf der Innenfläche (12) und der Außenfläche (11) der Wanne (10) realisiert werden.

7. Verfahren zum Erhalten eines Kochgefäßes (1) nach Anspruch 6, **dadurch gekennzeichnet, dass** es einen Schritt der Realisierung einer PTFE-Beschichtung auf der Innenseite (12) der Wanne (10) nach dem Färbungsschritt aufweist.

8. Verfahren zum Erhalten eines Kochgefäßes (1) nach einem der Ansprüche 1 bis 7, **dadurch gekennzeichnet, dass** die Harteloxierung bei einer Temperatur realisiert wird, die größer als oder gleich 0 °C ist.

9. Verfahren zum Erhalten eines Kochgefäßes (1) nach Anspruch 8, **dadurch gekennzeichnet, dass** die Harteloxierung bei einer Temperatur realisiert wird, die kleiner als oder gleich 17 °C ist.

10. Verfahren zum Erhalten eines Kochgefäßes (1) nach einem der Ansprüche 1 bis 9, **dadurch gekennzeichnet, dass** die Harteloxierung bei einer Temperatur realisiert wird, die zwischen 5 °C und 12 °C liegt.

11. Kochgefäß (1), aufweisend eine Wanne (10), die eine Außenfläche (11) aus Aluminium sowie eine Innenfläche (12) aufweist, wobei mindestens eine Außenfläche (11) aus Aluminium eloxiert und gefärbt ist, **dadurch gekennzeichnet, dass** die Außenfläche (11) harteloxiert ist, um eine harteloxierte Schicht zu erhalten, dass die harteloxierte Außenfläche (11) mit mindestens einem mineralischen, wasserlöslichen Pigment gefärbt ist, wobei metallische wasserlösliche Verbindungen im Inneren der Poren der harteloxierten Schicht eingefangen sind, wobei das oder das mindestens eine der mineralischen Pigmente vom Ferrioxalatyp ist/sind, so dass das Hinzufügen einer Schutzbeschichtung nicht mehr notwendig ist, um die Färbung der eloxierten Außenfläche des Kochgefäßes (1) zu bewahren.

12. Kochgefäß (1) nach Anspruch 11, **dadurch gekennzeichnet, dass** das oder das mindestens eine der mineralischen Pigmente ein Ammoniumferrioxalat ist/sind.

13. Kochgefäß (1) nach einem der Ansprüche 11 oder 12, **dadurch gekennzeichnet, dass** die Wanne (10) durch Stanzen eines Substrats (13), das mindestens eine Fläche aus Aluminium aufweist, erhalten wird.

14. Kochgefäß (1) nach Anspruch 13, **dadurch gekennzeichnet, dass** das Substrat (13) zwei Flächen aus Aluminium aufweist.

15. Kochgefäß (1) nach einem der Ansprüche 13 oder 14, **dadurch gekennzeichnet, dass** das Substrat (13) aus massivem Aluminium ist.

16. Kochgefäß (1) nach Anspruch 13, **dadurch gekennzeichnet, dass** das Substrat (13) durch ein Colaminat, das eine Fläche aus Aluminium und eine Fläche aus rostfreiem Stahl aufweist, gebildet ist.

17. Kochgefäß (1) nach einem der Ansprüche 11 bis 15, **dadurch gekennzeichnet, dass** das Gefäß (10) aus Aluminiumguss realisiert ist.

18. Kochgefäß (1) nach einem der Ansprüche 11 bis 17, **dadurch gekennzeichnet, dass** die Außenfläche (11) der Wanne (10) eine gebürstete oder mikrogestrahlte Oberfläche aufweist.

19. Kochgefäß (1) nach einem der Ansprüche 11 bis 18, **dadurch gekennzeichnet, dass** die Wanne (10) mindestens einen Einsatz aufweist, der aus ferromagnetischem Material realisiert ist.

20. Kochartikel (100), aufweisend ein Kochgefäß (1) und ein Greifelement (2), das an dem Kochgefäß (1) durch mindestens einen Niet (3) oder durch Schweißen befestigt ist, **dadurch gekennzeichnet, dass** das Kochgefäß (1) gemäß einem der Ansprüche 11 bis 19 ist.

21. Elektrisches Kochgerät (200), aufweisend ein Kochgefäß (1), das Heizmitteln (250) zugeordnet ist, **dadurch gekennzeichnet, dass** das Kochgefäß (1) gemäß einem der Ansprüche 11 bis 19 ist.

## Claims

1. A method of obtaining a cooking vessel (1), the method comprising the following steps:
- making a bowl (10) having an aluminum outer face (11) and an inner face (12); and
- anodizing at least the outer face (11) of the bowl (10);
- at least one coloring step being performed on the anodized outer face after the anodizing, said coloring step using at least one pigment;
said method being **characterized in that** the anodizing is hard-anodizing so as to obtain a hard-anodized layer, **in that** the pigment is a water-soluble inorganic pigment, the coloring step using a coloring bath containing water-soluble metal compounds that precipitate and are trapped inside the pores of the hard-anodized layer, the at least one inorganic pigment is of the ferric oxalate type, so that it is no longer necessary to add a protective coating in order to preserve the coloring of the anodized outer surface of the cooking vessel (1).

2. A method of obtaining a cooking vessel (1) according to claim 1, **characterized in that** the coloring step uses immersion in an aqueous solution of water-soluble compounds based on salts and/or on metal oxides.

3. A method of obtaining a cooking vessel (1) according to claim 1 or 2, **characterized in that** the at least one inorganic pigment is a ferric ammonium oxalate.

4. A method of obtaining a cooking vessel (1) according to any one of claims 1 to 3, **characterized in that** it further comprises a step of forming a polytetrafluoroethylene (PTFE) coating on the inner face (12) of the bowl (10), and **in that** the step of hard-anodizing the outer face (11) of the bowl (10) takes place after the step of forming a PTFE coating on the inner face (12) of the bowl (10).

5. A method of obtaining a cooking vessel (1) according to claim 4, **characterized in that** it further comprises a step of applying preliminary hard-anodizing to the outer face (11) and to the inner face (12) of the bowl (10) before the step of forming a PTFE coating on the inner face (12) of the bowl (10), and **in that** the step of hard-anodizing the outer face (11) of the bowl (10) takes place after a step of stripping the outer face (11) of the bowl (10) that takes place subsequently to the step of forming a PTFE coating on the inner face (12) of the bowl (10).

6. A method of obtaining a cooking vessel (1) according to any one of claims 1 to 3, **characterized in that** the hard-anodizing step and the coloring step are performed on the inner face (12) and on the outer face (11) of the bowl (10).

7. A method of obtaining a cooking vessel (1) according to claim 6, **characterized in that** it further comprises a step of forming a PTFE coating on the inner face (12) of the bowl (10) after the coloring step.

8. A method of obtaining a cooking vessel (1) according to any one of claims 1 to 7, **characterized in that** the hard-anodizing is performed at a temperature greater than or equal to 0 °C.

9. A method of obtaining a cooking vessel (1) according to any one of claims 8, **characterized in that** the hard-anodizing is performed at a temperature less than or equal to 17 °C.

10. A method of obtaining a cooking vessel (1) according to any one of claims 1 to 9, **characterized in that** the hard-anodizing is performed at a temperature lying in the range 5°C to 12 °C.

11. A cooking vessel (1) comprising a bowl (10) having an aluminum outer face (11) and an inner face (12), at least the aluminum outer face (11) being anodized and colored, said cooking vessel being **characterized in that** the outer face (11) is hard-anodized so as to obtain a hard-anodized layer, **in that** the hard-anodized outer face (11) is colored using at least one water-soluble inorganic pigment, water-soluble metal compounds being trapped inside the pores of the hard-anodized layer, the at least one inorganic pigment being of the ferric oxalate type, so that it is no longer necessary to add a protective coating in order to preserve the coloring of the anodized outer surface of the cooking vessel (1).

12. A cooking vessel (1) according to claim 11, **characterized in that** the at least one inorganic pigment is a ferric ammonium oxalate.

13. A cooking vessel (1) according to claim 11 or claim 12, **characterized in that** the vessel (10) is obtained by stamping a substrate (13) having at least one aluminum face.

14. A cooking vessel (1) according to claim 13, **characterized in that** the substrate (13) has two aluminum faces.

15. A cooking vessel (1) according to claim 13 or claim 14, **characterized in that** the substrate (13) is made of solid aluminum.

16. A cooking vessel (1) according to claim 13, **characterized in that** the substrate (13) is formed by a colaminate having one face made of aluminum and one face made of stainless steel.

17. A cooking vessel (1) according to any one of claims 11 to 15, **characterized in that** the bowl (10) is made of cast aluminum.

18. A cooking vessel (1) according to any one of claims 11 to 17, **characterized in that** the outer face (11) of the bowl (10) has a brushed or shot-peened surface.

19. A cooking vessel (1) according to any one of claims 11 to 18, **characterized in that** the bowl (10) further comprises at least one insert made of a ferromagnetic material.

20. A cooking utensil (100) including a cooking vessel (1) and a graspable member (2) fastened to said cooking vessel (1) by at least one rivet (3) or by welding, said cooking utensil being **characterized in that** said cooking vessel (1) is a cooking vessel according to any one of claims 11 to 19.

21. An electric cooking appliance (200), including a cooking vessel (1) associated with heater means (250), said electric cooking appliance being **characterized in that** said cooking vessel (1) is a cooking vessel according to any one of claims 11 to 19.
